# EUROPÄISCHE PATENTSCHRIFT

(11) **EP 0 659 620 B1**
(45) Veröffentlichungstag und Bekanntmachung des Hinweises auf die Patenterteilung: **07.05.1997**
(21) Anmeldenummer: 94117192.8
(22) Anmeldetag: 31.10.1994
(51) Int. Cl.: B60T 8/36, B60T 13/68

(54) **Ventileinrichtung**
Valve installation
Installation de soupape

(30) Priorität: 24.12.1993 DE 4344370
(43) Veröffentlichungstag der Anmeldung: 28.06.1995
(73) Patentinhaber: WABCO GmbH, D-30453 Hannover (DE)
(72) Erfinder: Fauck, Gerhard, D-30559 Hannover (DE); Dreyer, Werner, D-30419 Hannover (DE); Kiel, Bernd, D-31515 Wunstorf (DE)
(74) Vertreter: Schrödter, Manfred, Dipl.-Ing.

(56) Entgegenhaltungen:
- EP-A- 0 540 852
- EP-A- 0 547 407

## Beschreibung

Die Erfindung betrifft eine Ventileinrichtung mit zwei Ventilen gemäß dem Oberbegriff des Patentanspruchs 1.

Eine derartige Ventileinrichtung ist z. B. aus der Druckschrift WABCO Anti-Blockier-Systeme (ABS) für Nutzfahrzeuge, 1992, der Fa. WABCO Standard GmbH bekannt.

Wird eine solche Ventileinrichtung in einer mit einem Antiblockierregelsystem (ABS) und einem Antriebs-Schlupf-Regelsystem (ASR) ausgerüsteten Fahrzeugbremsanlage eingesetzt, in welcher ein Regelventil, angeordnet ist, das wahlweise mit dem von der Ventileinrichtung ausgesteuerten Druck oder mit einem Vorratsdruck gespeist werden soll, ist es erforderlich, den Druckmitteleingang des Regelventils über eine erste Druckmittelleitung mit dem Druckmittelausgang der Ventileinrichtung und über eine zweite Druckmittelleitung und ein schaltbares Ventil mit einem Druckmittel-Vorratsbehälter zu verbinden.

Um zu verhindern, daß von der Ventileinrichtung ausgesteuerter Druck über das Regelventil und das schaltbare Ventil oder umgekehrt von dem schaltbaren Ventil ausgesteuerter Druck über das Regelventil und die Ventileinrichtung unbeabsichtigt zur Atmosphäre hin abströmt, sind die von der Ventileinrichtung und vom schaltbaren Ventil kommenden Druckmittelleitungen mit einem ersten Eingang und einem zweiten Eingang eines Wechselventils verbunden, dessen Ausgang mit dem Eingang des Regelventils verbunden ist.

Der Aufwand an zu verlegenden Druckmittelleitungen, Anschlußstücken und Verschraubungen ist bei dem Einsatz der eingangs erwähnten Ventileinrichtung in einer Anlage der vorstehend beschriebenen Art sehr hoch. Die Vielzahl der benötigten Druckmittelleitungen und Verschraubungen stellen zudem potentielle Fehlerquellen dar.

Der Erfindung liegt deshalb die Aufgabe zugrunde, eine Ventileinrichtung der eingangs erwähnten Art so auszubilden, daß sie mit einfachen Mitteln mit Einrichtungen gekoppelt werden kann, die Druckmittel liefern oder Druckmittel verbrauchen.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die Erfindung bietet insbesondere den Vorteil, eine Ventileinrichtung zu erhalten, die mit anderen Einrichtungen, wie z. B. Ventilen, zusammengeschaltet werden kann, ohne eine Vielzahl von separaten Druckmittelleitungen verwenden zu müssen. Die erfindungsgemäße Ventileinrichtung bildet mit dem Wechselventil eine kompakte, leicht zu montierende Baueinheit.

Wird gemäß einer vorteilhaften Weiterbildung des Erfindungsgegenstandes zur Verbindung des einen Druckmitteleingangs des Wechselventils mit einem weiteren Ventil ein als Adapter dienendes Verbindungsteil verwendet, so kann dieses Verbindungsteil auch an seinem dem weiteren Ventil zugewandten Ende einen Ventilsitz aufweisen, der zusammen mit einem beweglich an dem weiteren Ventil angeordneten Ventilglied das weitere Ventil bildet.

Wenn das weitere Ventil als elektromagnetisch betätigbares Ventil ausgebildet sein soll, benötigt der mit dem Verbindungsteil zu verbindende Teil lediglich eine Magnetspule und einen Anker mit Dichtkörper, welche das bewegbare Ventilglied bilden. Der Ventilsitz, die Druckmitteleingangskammer und die Druckmittelausgangskammer sind am bzw. im Verbindungsteil angeordnet.

Anhand der Zeichnung wird nachfolgend ein Ausführungsbeispiel der Erfindung näher erläutert.

Es zeigen:
- Fig.1: eine als ALB-Regler ausgebildete Ventileinrichtung mit einem Wechselventil, über welches ein ABS-Regelventil mit dem von der Ventileinrichtung ausgesteuerten Druck oder mit einem Vorratsdruck gespeist wird und
- Fig. 2: einen vergrößerten Ausschnitt aus der Ventileinrichtung gemäß Fig. 1.

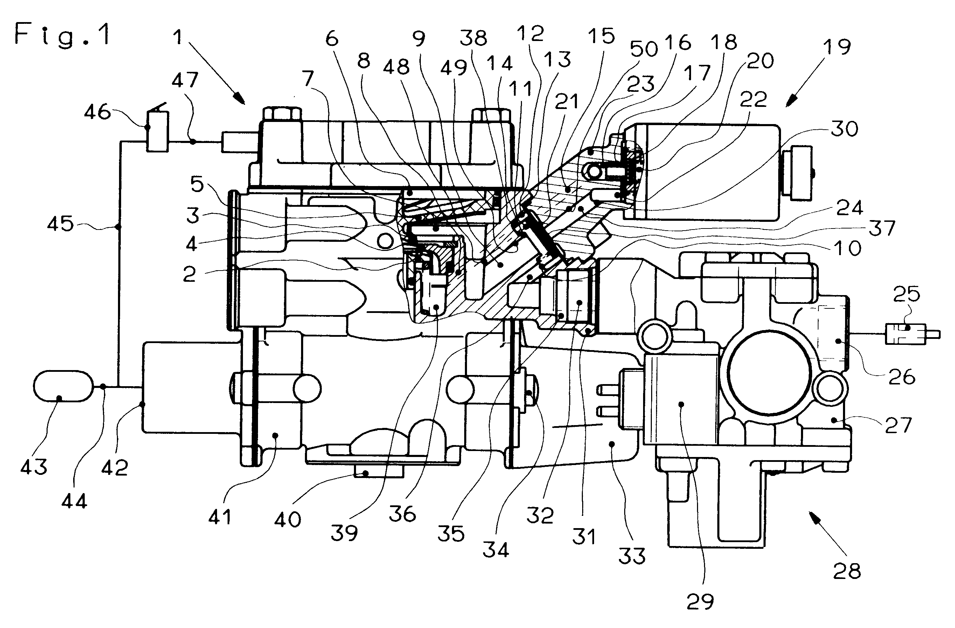

Es wird angenommen, daß die in Figur 1 gezeigte Ventileinrichtung in der Bremsanlage eines Fahrzeugs angeordnet ist, welches mit einem Antiblockierregelsystem (ABS) und mit einem Antriebs-Schlupf-Regelsystem (ASR) ausgerüstet ist.

Die Ventileinrichtung besteht aus einem ersten Ventil (1) und einem zweiten Ventil, wobei das erste Ventil (1) als achslastabhängiger Bremskraftregler, nachstehend ALB-Regler genannt, ausgebildet ist, mittels welchem der Bremsdruck in den Bremszylindern der Hinterachse eines Fahrzeugs geregelt wird.

Der ALB-Regler (1) besitzt einen in einem Gehäuse (41) in Richtung der Längsachse des Gehäuses (41) bewegbar angeordneten, als Relaiskolben (5) dienenden Steuerkolben, der eine Druckmittelausgangskammer (7) von einer Steuerkammer (6) trennt. Der Relaiskolben (5) dient zur Betätigung eines kombinierten Einlaß- und Auslaßventils (2, 3, 4), das sich aus einem gehäusefesten Ventilsitz (4), einem auf den Ventilsitz (4) zu bzw. von diesem weg bewegbaren Ventilglied (2) und einem am Relaiskolben (5) angeordneten weiteren Ventilsitz (3) zusammensetzt. Das Ventilglied (2) bildet mit dem gehäusefesten Ventilsitz (4) das Einlaßventil (2, 4) und mit dem am Relaiskolben (5) angeordneten Ventilsitz (3) das Auslaßventil (2, 3) des kombinierten Einlaß- und Auslaßventils (2, 3, 4). Über das kombinierte Einlaß- und Auslaßventil (2, 3, 4) ist die Druckmittelausgangskammer (7) in Abhängigkeit von der Stellung des Relaiskolbens (5) mit einer Druckmitteleingangskammer (39) oder mit einem zu einer Druckmittelsenke, wie z. B. der Atmosphäre, hinführenden Druckmittelauslaß (40) verbindbar oder gegen beide absperrbar.

Die Steuerkammer (6) ist über eine Druckmittelleitung (47) mit dem Ausgang eines Motorwagen-Bremsventils (46) verbunden, dessen Eingang über Druckmittelleitungen (45) und (44) mit einem als Druckmittelquelle dienenden Druckluft-Vorratsbehälter (43) in Verbindung steht. Über einen Druckmitteleingang (42) und die Druckmittelleitung (44) ist die Druckmitteleingangskammer (39) mit dem Druckluft-Vorratsbehälter (43) verbunden. Die Druckmittelausgangskammer (7) weist einen Druckmittelausgang (48) auf.

Der Druckmittelausgang (48) ist mit dem einen Ende eines im Gehäuse (41) des ersten Ventils (1) angeordneten, als Druckmittelleitung dienenden ersten Kanals (9) verbunden. Das andere Ende des ersten Kanals (9) ist mit einem ersten Druckmitteleingang (49) eines als Wechselventil ausgebildeten zweiten Ventils verbunden. Dieses auch den ersten Druckmitteleingang (49) des Wechselventils bildende ausgangsseitige Ende des ersten Kanals (9) ist als ein erster Ventilsitz (14) des Wechselventils ausgebildet. Der erste Ventilsitz (14) ist in einer Druckmittelkammer (38) des Wechselventils gelegen, die im Gehäuse (41) angeordnet ist. Die Druckmittelkammer (38) wird von den einander zugewandten Seiten des Gehäuses (41) des ersten Ventils (1) und eines im Bereich des ersten Druckmitteleingangs (49) des Wechselventils angeordneten zusätzlichen Gehäuseteiles (23) begrenzt.

Das zusätzliche Gehäuseteil (23) dient als Verbindungsteil zum Verbinden des Wechselventils mit einem dritten Ventil (19). Die Druckmittelkammer (38) des Wechselventils wird von einer koaxial zum ersten Kanal (9) angeordneten, an den ersten Kanal (9) anschließenden abgestuften Ausnehmung (12) des Gehäuses (41) des ersten Ventils (1) gebildet, in welche der dieser Ausnehmung (12) zugewandte, ebenfalls abgestuft ausgebildete Endbereich des Verbindungsteiles (23) eingeführt ist. Das Verbindungsteil (23) ist mit seinem abgestuft ausgebildeten Endbereich so weit in die Ausnehmung (12) des Gehäuses (41) eingeführt, daß es mit seiner ringförmigen Stirnfläche an der ringförmigen Stufe und mit seiner Stufe an der dieser zugewandten Seite des Gehäuses (41) anliegt. Zwischen der äußeren Mantelfläche des Verbindungsteiles (23) und der die Ausnehmung (12) begrenzenden Wand ist ein Dichtring (13) angeordnet. Es ist natürlich auch möglich, den Dichtring (13) zwischen den einander zugewandten Seiten des Gehäuses (41) und des Verbindungsteiles (23) anzuordnen.

An der dem Gehäuse (41) des ersten Ventils (1) abgewandten Seite des Verbindungsteiles (23) ist das als 3/2-Wege-Elektromagnetventil ausgebildete dritte Ventil (19) befestigt. Das dritte Ventil (19) besteht im wesentlichen aus einer in einem Gehäuse angeordneten Magnetspule, einem mit zwei Dichtelementen versehenen Anker, der als bewegbares Ventilglied (20) dient, sowie einem dem Ventilglied (20) gegenüber im Verbindungsteil (23) angeordneten ersten Ventilsitz (18) und einem dem ersten Ventilsitz (18) gegenüber, auf der anderen Seite des Ventilgliedes (20) im Gehäuse angeordneten zweiten Ventilsitz. Der erste Ventilsitz (18) bildet mit dem Ventilglied (20) ein Einlaßventil (18, 20) und der zweite Ventilsitz bildet mit dem Ventilglied (20) ein Auslaßventil. Das dritte Ventil (19) besitzt eine im Verbindungsteil (23) angeordnete Druckmitteleingangskammer (16), in welcher der von einem rohrförmigen Körper (17) gebildete erste Ventilsitz (18) befestigt ist und eine Druckmittelausgangskammer (22), die ebenfalls im Verbindungsteil (23) angeordnet ist.

An einen Druckmittelausgang (30) der Druckmittelausgangskammer (22) des dritten Ventils (19) schließt ein als Druckmittelleitung dienender zweiter Kanal (24) an, der im Verbindungsteil (23) in Richtung der Längsachse des Verbindungsteils (23) verläuft und vorzugsweise koaxial zum ersten Kanal (9) des ersten Ventils (1) angeordnet ist. Der zweite Kanal (24) mündet in die Druckmittelkammer (38) des Wechselventils ein, wobei das in die Druckmittelkammer (38) einmündende Ende des zweiten Kanals (24) als ein in der Druckmittelkammer (38) gelegener zweiter Ventilsitz (21) für das Wechselventil ausgebildet ist, der dem ersten Ventilsitz (14) des Wechselventils gegenüberliegt. Zwischen den beiden Ventilsitzen (14) und (21) ist in der Druckmittelkammer (38) ein Ventilglied (37) bewegbar angeordnet. Das Ventilglied (37) wird von einer Feder (11), die sich an dem den ersten Kanal (9) des Gehäuses (41) ringförmig umgebenden Boden abstützt, in Richtung auf den Ventilsitz (21) zu beaufschlagt und von dieser am Ventilsitz (21) gehalten. Das zwischen dem ersten Ventilsitz (14) und dem zweiten Ventilsitz (21) angeordnete Ventilglied (37) bildet mit den beiden Ventilsitzen (14) und (21) das Wechselventil (14, 21, 37). Das in die Druckmittelkammer (38) einmündende Ende des zweiten Kanals (24) stellt einen zweiten Druckmitteleingang (50) des Wechselventils (14, 21, 37) dar.

Über das Wechselventil (14, 21, 37) ist ein am bzw. im Gehäuse (41) des ersten Ventils (1) angeordneter Druckmittelanschluß (31) in Abhängigkeit von dem höheren der beiden einander entgegengerichtet auf das Ventilglied (37) einwirkenden Drücke mit der Druckmittelausgangskammer (7) des ersten Ventils (1) oder mit der Druckmittelausgangskammer (22) des dritten Ventils (19) verbindbar.

An die Druckmitteleingangskammer (16) des dritten Ventils (19) schließt ein als Druckmittelleitung dienender dritter Kanal (15) an, der im Verbindungsteil (23) in Richtung der Längsachse des Verbindungsteiles (23) verläuft. Die Druckmitteleingangskammer (16) ist praktisch der dem dritten Ventil (19) zugewandte Endbereich des dritten Kanals (15). Im Gehäuse (41) des ersten Ventils ist ein als Druckmittelleitung dienender vierter Kanal (8) angeordnet, der sich von der Druckmitteleingangskammer (39) des ersten Ventils (1) ausgehend bis zu dem der Ausnehmung (12) benachbarten Bereich des Gehäuses (41) hin erstreckt. Der vierte Kanal (8) des ersten Ventils (1) und der dritte Kanal (15) im Verbindungsteil (23) sind so im Gehäuse (41) des Ventils (1) und im Verbindungsteils (23) angeordnet, daß sie nach dem Zusammenfügen von Gehäuse (41) und Verbindungsteil (23) eine die Druckmitteleingangskammer (39) des ersten Ventils (1) mit der Druckmitteleingangskammer (16) des dritten Ventils (19) verbindende Druckmittelleitung (8, 15) bilden. Zwischen den einander zugewandten Seiten des Gehäuses (41) und des Verbindungsteiles (23) ist eine die einander zugewandten Enden der Kanäle (8) und (15) umgebende Dichtung angeordnet.

Wie bereits erwähnt, besitzt das erste Ventil (1) einen Druckmittelanschluß (31) für ein externes Gerät, der über einen im Gehäuse (41) des ersten Ventils (1) angeordneten fünften Kanal (36) mit einem Druckmittelausgang (10) des Wechselventils (14, 21, 37) verbunden ist.

An den Druckmittelanschluß (31) des ersten Ventils (1) ist ein als Verbraucher dienendes viertes Ventil (28) angeschlossen. Das vierte Ventil (28) ist im Ausführungsbeispiel als ABS-Regelventil ausgebildet.

Das ABS-Regelventil (28) weist ein Gehäuse (27) mit einem Druckmitteleingang (32), einem Druckmittelausgang (26) und einem zur Atmosphäre hin führenden Druckmittelauslaß sowie einen zur Betätigung des Ventils des ABS-Regelventils (28) dienenden Elektromagneten (29) auf.

Das Gehäuse (27) des ABS-Regelventils (28) ist mittels eines Verbindungsteiles (33) mit dem Gehäuse (41) des ersten Ventils (1) verbunden. Das Verbindungsteil (33) kann ein an das Gehäuse (27) des ABS-Regelventils (28) angeformtes, nach Art eines T-Trägers ausgebildetes Teil sein, welches mittels Schrauben (34) mit dem Gehäuse (41) des ersten Ventils (1) verbunden ist. Es kann natürlich auch ein Winkelblech sein, das mittels Schrauben sowohl mit dem Gehäuse (27) des ABS-Regelventils (28) als auch mit dem Gehäuse (41) des ersten Ventils (1) verbunden ist. Der Druckmitteleingang (32) des ABS-Regelventils (28) befindet sich in einem Anschlußstutzen (35) des ABS-Regelventils (28). Der Anschlußstutzen (35) des ABS-Regelventils (28) ist in den ebenfalls abgestuft ausgebildeten Druckmittelanschluß (31) des ersten Ventils (1) eingeführt. Über eine Druckmittelleitung ist der Druckmittelausgang (26) des ABS-Regelventils (28) mit einem Bremszylinder (25) der Hinterachse des Fahrzeugs verbunden. Zur Verbindung des Druckmittelanschlusses (31) des ersten Ventils (1) mit dem ABS-Regelventil (28) kann z. B. auch ein den Anschlußstutzen (31) des ersten Ventils (1) mit dem Anschlußstutzen (35) des ABS-Regelventils (28) verbindendes Rohr oder ein das Gehäuse (41) des ersten Ventils (1) mit dem Gehäuse des ABS-Regelventils verbindender Flansch dienen.

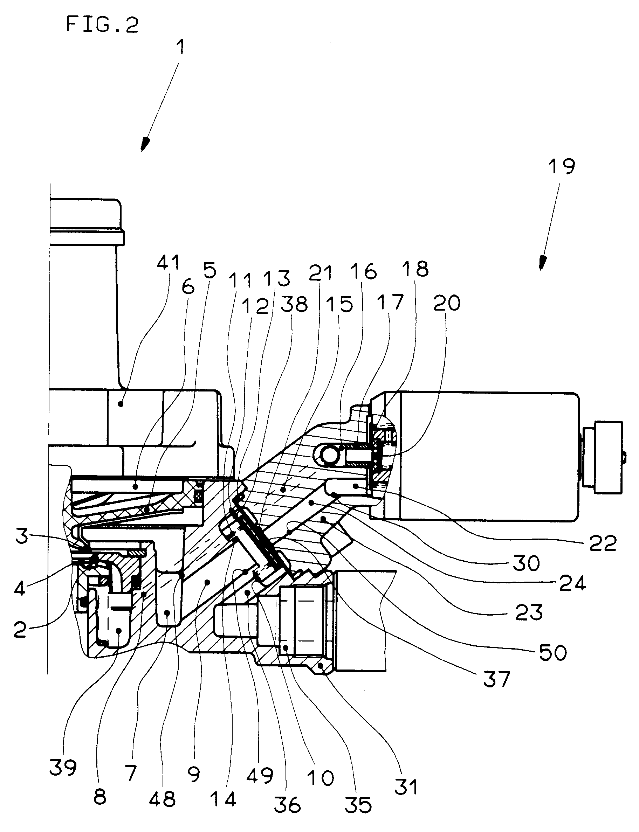

Da der in Fig. 2 gezeigte Ausschnitt der Ventileinrichtung lediglich eine vergrößerte Darstellung des das Wechselventil und das Verbindungsteil (23) sowie das dritte Ventil (19) aufweisenden Bereiches der Ventileinrichtung nach Fig. 1 ist, wird auf eine Wiederholung der Beschreibung verzichtet. Die in Fig. 2 gezeigten Teile der Ventile und des Verbindungsteiles haben deshalb die gleichen Bezugsziffern wie die in Fig. 1 gezeigten Teile der Ventile und des Verbindungsteiles.

Die Funktion der im vorstehend beschriebenen Ventileinrichtung wird nachfolgend an Hand der Figuren 1 und 2 näher erläutert.

Wie bereits erwähnt, wird angenommen, daß die in der Zeichnung gezeigte Ventileinrichtung in der Bremsanlage eines Fahrzeugs angeordnet ist, welches mit einem Antiblockierregelsystem (ABS) und mit einem Antriebs-Schlupf-Regelsystem (ASR) ausgerüstet ist.

Das erste Ventil (1) ist als achslastabhängiger Bremskraftregler, nachstehen ALB-Regler genannt, ausgebildet, das zweite Ventil (14, 21, 37) ist ein Wechselventil, das dritte Ventil (19) ist als 3/2-Wege-Elektromagnetventil ausgebildet und das vierte Ventil (28) ist ein ABS-Regelventil.

Bei nichtbetätigtem Motorwagen-Bremsventil (46) des Fahrzeugs befindet sich das Einlaßventil (2, 4) des kombinierten Einlaß- und Auslaßventils (2, 3, 4) des ALB-Reglers (1) in seiner Schließstellung und das Auslaßventil (3, 2) des kombinierten Einlaß- und Auslaßventils (2, 3, 4) des ALB-Reglers (1) ist geöffnet. Die Druckmitteleingangskammer (39), in welcher Druckluft aus dem Druckluft-Vorratsbehälter (43) ansteht, ist gegen die Druckmittelausgangskammer (7) abgesperrt. Die Druckmittelausgangskammer (7) ist über den Druckmittelauslaß (40) mit der Atmosphäre verbunden.

Das Einlaßventil (18, 20) des 3/2-Wege-Elektromagnetventils (19) befindet sich in der Schließstellung, so daß die Druckmitteleingangskammer (16) und die Druckmittelausgangskammer (22) des 3/2-Wege-Elektromagnetventils (19) gegeneinander abgesperrt sind. Das Auslaßventil des 3/2-Wege-Elektromagnetventils (19) befindet sich in der Offenstellung, so daß die Druckmittelausgangskammer (22) des 3/2-Wege-Elektromagnetventils (19) und somit auch der im Verbindungsteil (23) angeordnete zweite Kanal (24) mit der Atmosphäre verbunden sind. Über den vierten Kanal (8) des ALB-Reglers (1) und den dritten Kanal (15) im Verbindungsteil (23) ist die Druckmitteleingangskammer (16) des 3/2-Wege-Elektromagnetventils (19) mit der Druckmitteleingangskammer (39) des ALB-Reglers (1) verbunden. In der Druckmitteleingangskammer (16) des 3/2-Wege-Elektromagnetventils (19) steht somit Vorratsdruckluft aus dem Druckluft-Vorratsbehälter (43) an.

Das Ventilglied (37) des Wechselventils (14, 21, 37) wird von der Feder (11) auf dem zweiten Ventilsitz (21) des Wechselventils (14, 21, 37) gehalten (1. Schaltstellung), so daß die Druckmittelausgangskammer (22) des 3/2-Wege-Elektromagnetventils (19) und der Druckmittelanschluß (31) des ALB-Reglers (1) gegeneinander abgesperrt sind. Der Druckmitteleingang (32) des ABS-Regelventils (28) ist über den im Gehäuse (41) des ALB-Reglers (1) angeordneten fünften Kanal (36) sowie das geöffnete erste Ventil (14, 37) des Wechselventils (14, 21, 37) und den ersten Kanal (9) mit der Druckmittelausgangskammer (7) des ALB-Reglers (1) verbunden.

Wird bei Betätigen des Motorwagen-Bremsventils (46) Druck in die Steuerkammer (6) des ALB-Reglers (1) eingesteuert, bewirkt der sich in der Steuerkammer (6) aufbauende Druck, daß der Relaiskolben (5) sich abwärts, in Richtung auf das kombinierte Einlaß- und Auslaßventil (2, 3, 4) zubewegt. Dabei gelangt das Auslaßventil (2, 3) in die Schließstellung und das Einlaßventil (4, 2) des kombinierten Einlaß- und Auslaßventils (2, 3, 4) wird geöffnet. Von der Druckmitteleingangskammer (39) strömt dann durch das geöffnete Einlaßventil (2, 4) des kombinierten Einlaß- und Auslaßventils (2, 3, 4) Druckluft in die Druckmittelausgangskammer (7) des ALB-Reglers (1) und gelangt von dieser über den ersten Kanal (9), das geöffnete erste Ventil (14, 37) des Wechselventils (14, 21, 37) und den fünften Kanal (36), den Druckmittelanschluß (31) sowie den Druckmitteleingang (32) des ABS-Regelventils (28) zum ABS-Regelventil (28) und von diesem weiter zu den Bremszylindern (25) der Hinterachse des Fahrzeugs.

Zeigen bei einem Bremsvorgang die Räder der Hinterachse des Fahrzeugs Blockierneigung, so wird das ABS-Regelventil (28) von einer elektrischen Steuereinrichtung angesteuert. Mittels des ABS-Regelventils (28) wird dann der Druck in den Bremszylindern (25) der Hinterachse des Fahrzeugs geregelt.

Beginnen bei einem Anfahrvorgang des Fahrzeugs die Räder der Hinterachse des Fahrzeugs durchzudrehen, wird das 3/2-Wege-Elektromagnetventil (19) von Ausgangssignalen einer elektrischen Steuereinrichtung des Antriebs-Schlupf-Regelsystems angesteuert. Das Einlaßventil (18, 20) des 3/2-Wege-Elektromagnetventils (19) gelangt in die Offenstellung und das Auslaßventil des 3/2-Wege-Elektromagnetventils (19) gelangt in die Schließstellung. Von der Druckmitteleingangskammer (16) des 3/2-Wege-Elektromagnetventils (19) gelangt über das dann geöffnete Einlaßventil (18, 20) des 3/2-Wege-Elektromagnetventils (19) Druckluft aus der Druckmitteleingangskammer (39) des ALB-Reglers (1) in die Druckmittelausgangskammer (22) des 3/2-Wege-Elektromagnetventils (19). Von der Druckmittelausgangskammer (22) strömt die Druckluft dann in den an die Druckmittelausgangskammer (22) anschließenden zweiten Kanal (24) des Verbindungsteiles (23) und beaufschlagt das Ventilglied (37) des Wechselventils (14, 21, 37).

Der sich in dem zweiten Kanal (24) aufbauende Druck bewegt das Ventilglied (37) gegen die Kraft der Feder (11) vom zweiten Ventilsitz (21) weg, in Richtung auf den ersten Ventilsitz (14) des Wechselventils (14, 21, 37) zu und bringt das Ventilglied (37) am ersten Ventilsitz (14) zur Anlage (2. Schaltstellung). Das erste Ventil (14, 37) des Wechselventils (14, 21, 37) ist dann geschlossen und das zweite Ventil (21, 37) des Wechselventils (14, 21, 37) ist dann geöffnet. Die Druckmittelausgangskammer (7) des ALB-Reglers (1) ist dann gegen den Druckmitteleingang (32) des ABS-Regelventils (28) abgesperrt und der Druckmitteleingang (32) des ABS-Regelventils (28) ist über das geöffnete zweite Ventil (21, 37) des Wechselventils (14, 21, 37) und den zweiten Kanal (24) mit der Druckmittelausgangskammer (22) des 3/2-Wege-Elektromagnetventils (19) verbunden. Das ABS-Regelventil (28) wird dann mit dem Druck aus der Druckmitteleingangskammer (39) des ALB-Reglers (1) und somit mit dem Druck aus dem Druckluft-Vorratsbehälter (43) versorgt.

Vom ABS-Regelventil (28) wird Vorratsdruck in die Bremszylinder (25) der Hinterachse des Fahrzeugs eingesteuert. Das ABS-Regelventil (28) wird von den Ausgangssignalen der elektrischen Steuereinrichtung des Antriebs-Schlupf-Regelsystems angesteuert, so daß der Druck in den Bremszylindern (25) der Hinterachse von den auf das ABS-Regelventil (28) gegebenen Signalen der elektrischen Steuereinrichtung des Antriebs-Schlupf-Regelsystems in der Weise gesteuert wird, daß die Bremsen der Räder der Hinterachse des Fahrzeugs mehr oder weniger stark die Drehbewegung der Räder verzögern, um dem Durchdrehen der Räder entgegenzuwirken.

Das vierte Ventil, wie z. B. das erwähnte ABS-Regelventil, kann selbstverständlich auch mit Vorratsdruckmittel aus einer separaten Druckmittelquelle versorgt werden. In einem solchen Fall ist der Druckmitteleingang des dritten Ventils nicht mit der Druckmitteleingangskammer des ersten Ventils, wie z. B. des ALB-Reglers, sondern mit der separaten Druckmittelquelle oder unter Umgehung der Druckmitteleingangskammer des ersten Ventils über eine Druckmittelleitung mit der Druckmittelquelle für das erste Ventil verbunden.

Die erwähnte separate Druckmittelquelle ist eine von der Druckmittelquelle für das erste Ventil unabhängige Druckmittelquelle.

Das erste Ventil (1) braucht selbstverständlich nicht als ALB-Regler ausgebildet zu sein. Es kann ein beliebiges von einem Druckmittel gesteuertes Ventil, wie z. B. ein einfaches Relaisventil sein, welches in Einrichtungen und Anlagen mit einem oder mehreren Verbrauchern einsetzbar ist.

Zur Verbindung der aus dem ersten Ventil (1) und dem Wechselventil (14, 21, 37) bestehenden Ventileinrichtung mit weiteren Ventileinrichtungen können an den weiteren Ventileinrichtungen oder auch an der Ventileinrichtung befestigte oder mit diesen einstückig ausgebildete Verbindungsteile dienen, die durch Schrauben, Schnappmittel oder Steckmittel mit dem Gehäuse der jeweils anderen Ventileinrichtung verbunden werden.

Das Verbindungsteil kann, wie im Vorstehenden bereits erwähnt, an seinen beiden einander abgewandten Seiten Ventilsitze aufweisen, die mit je einem Ventilglied je ein Ventil bilden. Das Ventilglied kann Teil eines weiteren Ventils sein, mit dem das Verbindungsteil verbunden wird. Das Ventilglied (37) und die dieses belastende Feder (11) des Wechselventils (14, 21, 37) können auch in einem nach Art eines Käfigs ausgebildeten Teil gehalten werden, welches an der der Ausnehmung (12) des Gehäuses (41) zugewandten Stirnseite des Verbindungsteiles (23) angeordnet ist.

Die erfindungsgemäße Ventileinrichtung kann, wie beschrieben, in der Bremsanlage eines Fahrzeugs angeordnet sein, die mit einem Antiblockierregelsystem und mit einem Antriebs-Schlupf-Regelsystem ausgerüstet ist. Sie kann jedoch auch in jeder beliebigen anderen Einrichtung oder Anlage angeordnet sein, in welcher ein Verbraucher wahlweise mit zwei verschiedenen Druckmittelquellen verbindbar sein soll.

Die Ventileinrichtung kann natürlich auch als durchsteuerndes Ventil ausgebildet sein. In einem solchen Fall ist die Druckmitteleingangskammer des ersten Ventils gleichzeitig Steuerkammer. Das dritte Ventil muß dann separat mit Vorratsdruck versorgt werden, da in der als Steuerkammer dienenden Druckmitteleingangskammer des ersten Ventils nicht ständig Druckmittel vorhanden ist.

## Patentansprüche

1. Ventileinrichtung mit einem ersten Ventil und einem zweiten Ventil mit folgenden Merkmalen:
a) das erste Ventil weist eine Druckmitteleingangskammer (39) und eine Druckmittelausgangskammer (7) auf, die in einem Gehäuse (41) angeordnet sind;
b) die Druckmittelausgangskammer (7) ist über eine Einlaß- und Auslaßventileinrichtung (2, 3, 4) wahlweise mit der Druckmitteleingangskammer (39) oder mit einer Druckmittelsenke verbindbar oder gegen beide absperrbar;
c) das zweite Ventil ist als Wechselventil ausgebildet, welches einen Druckmittelausgang (10) sowie einen ersten Druckmitteleingang (49) und einen zweiten Druckmitteleingang (50) besitzt, wobei der Druckmittelausgang (10) wahlweise mit dem ersten Druckmitteleingang (49) oder mit dem zweiten Druckmitteleingang (50) verbindbar ist;
d) im zweiten Ventil ist eine Druckmittelkammer (38) vorgesehen, in welcher ein Sitzventil mit einem dem ersten Druckmitteleingang (49) zugeordneten ersten Ventilsitz (14) und einem dem zweiten Druckmitteleingang (50) zugeordneten zweiten Ventilsitz (21) angeordnet ist, zwischen denen ein Ventilglied (37) bewegbar angeordnet ist;
e) der Druckmittelausgang (10) des Wechselventils wird von der Druckmittelkammer (38) bzw. von einer an die Druckmittelkammer (38) anschließenden Druckmittelleitung (36) gebildet;
f) der erste Druckmitteleingang (49) des Wechselventils ist mit einem Druckmittelausgang (48) des ersten Ventils verbunden;
gekennzeichnet durch die folgenden Merkmale:
g) die Verbindung zwischen dem ersten Druckmitteleingang (49) des Wechselventils (14, 21, 37) und dem Druckmittelausgang (48) des ersten Ventils (1) besteht aus einem im Gehäuse (41) des ersten Ventils (1) angeordneten ersten Kanal (9);
h) das der Druckmittelkammer (38) des Wechselventils (14, 21, 37) zugewandte ausgangsseitige Ende des Kanals (9) ist so ausgebildet, daß es als erster Ventilsitz (14) für das Wechselventil (14, 21, 37) dient;
i) es ist ein zusätzliches Gehäuseteil (23) vorgesehen, welches im Bereich des ersten Ventilsitzes (14) so am Gehäuse (41) des ersten Ventils (1) befestigt ist, daß es mit dem Gehäuse (41) des ersten Ventils (1) die Druckmittelkammer (38) bildet, in der der erste Ventilsitz (14) des Wechselventils (14, 21, 37) liegt;
k) das zusätzliche Gehäuseteil (23) weist einen zweiten Kanal (24) auf, der in die Druckmittelkammer (38) des Wechselventils (14, 21, 37) mündet;
l) das in die Druckmittelkammer (38) mündende Ende des zweiten Kanals (24) ist so ausgebildet, daß es als zweiter Ventilsitz (21) des Wechselventils (14, 21, 37) dient.

2. Ventileinrichtung nach Anspruch 1, gekennzeichnet durch die folgenden Merkmale:
a) an dem der Druckmittelkammer (38) des Wechselventils (14, 21, 37) abgewandten Seite des zusätzlichen Gehäuseteiles (23) ist ein drittes Ventil (19) angeordnet, welches zur Verbindung des zweiten Druckmitteleingangs (50) des Wechselventils (14, 21, 37) mit einer Druckmittelquelle dient;
b) das dritte Ventil (19) besitzt eine über eine Druckmittelleitung mit der Druckmittelquelle verbundene Druckmitteleingangskammer (16) und eine mit dem im zusätzlichen Gehäuseteil (23) angeordneten zweiten Kanal (24) verbundene Druckmittelausgangskammer (22).

3. Ventileinrichtung nach Anspruch 2, gekennzeichnet durch die folgenden Merkmale:
a) die Druckmittelleitung ist als ein im zusätzlichen Gehäuseteil (23) angeordneter dritter Kanal (15) ausgebildet, der mit einem im Gehäuse (41) des ersten Ventils (1) angeordneten vierten Kanal (8) in Verbindung steht, der wiederum mit der Druckmitteleingangskammer (39) des ersten Ventils (1) verbunden ist;
b) der im zusätzlichen Gehäuseteil (23) angeordnete dritte Kanal (15) ist an seinem dem dritten Ventil (19) zugewandten Ende als Ventilsitz (18) ausgebildet, der mit einem im dritten Ventil (19) bewegbar angeordneten Ventilglied (20) das dritte Ventil (19) bildet;
c) der den Ventilsitz (18) aufweisende Endbereich des dritten Kanals (15) ist als Druckmitteleingangskammer (16) für das dritte Ventil (19) ausgebildet;
d) die mit dem im zusätzlichen Gehäuseteil (23) angeordneten zweiten Kanal (24) verbundene Druckmittelausgangskammer (22) für das dritte Ventil (19) ist auf der dem dritten Ventil (19) zugewandten Seite des zusätzlichen Gehäuseteiles (23) im zusätzlichen Gehäuseteil (23) angeordnet und wird von der dem zusätzlichen Gehäuseteil (23) zugewandten Seite des dritten Ventils (19) begrenzt.

4. Ventileinrichtung nach wenigstens einem der vorhergehenden Ansprüche, dadurch gekennzeichnet, daß das zusätzliche Gehäuseteil (23) als Verbindungsteil zum Verbinden des dritten Ventils (19) mit dem Gehäuse (41) des ersten Ventils (1) ausgebildet ist, wobei die dem Gehäuse (41) des ersten Ventils (1) zugewandte Seite des zusätzlichen Gehäuseteiles (23) den zweiten Ventilsitz (21) und den zweiten Druckmitteleingang (50) des Wechselventils aufweist.

5. Ventileinrichtung nach wenigstens einem der vorhergehenden Ansprüche, dadurch gekennzeichnet, daß das zusätzliche Gehäuseteil (23) mit dem Gehäuse (41) des ersten Ventils (1) und mit dem Gehäuse des dritten Ventils (19) lösbar verbunden ist.

6. Ventileinrichtung nach wenigstens einem der vorhergehenden Ansprüche, dadurch gekennzeichnet, daß das erste Ventil (1) einen Druckmittelanschluß (31) besitzt, der mit einem Druckmittelanschlußstutzen (35) eines vierten Ventils (28) verbunden ist.

7. Ventileinrichtung nach wenigstens einem der vorhergehenden Ansprüche, dadurch gekennzeichnet, daß das vierte Ventil (28) ein Gehäuse (27) aufweist, welches über ein Verbindungsteil (33) mit dem Gehäuse (41) des ersten Ventils (1) verbunden ist.

8. Ventileinrichtung nach wenigstens einem der vorhergehenden Ansprüche, dadurch gekennzeichnet, daß das vierte Ventil als ABS-Regelventil mit einem Druckmitteleingang (32), einem Druckmittelausgang (26) und einem Druckmittelauslaß (30) sowie einem zur Betätigung des Ventils des ABS-Regelventils dienenden Elektromagneten (21) ausgebildet ist.

9. Ventileinrichtung nach wenigstens einem der vorhergehenden Ansprüche, dadurch gekennzeichnet, daß das Ventilglied (37) des Wechselventils (14, 21, 37) in einem nach Art eines Käfigs ausgebildeten Teil beweglich gehalten wird, wobei das nach Art eines Käfigs ausgebildete Teil an der der Ausnehmung (12) des Gehäuses (41) des erste Ventils (1) zugewandten Stirnseite des Verbindungsteiles (23) angeordnet ist.

## Claims

1. Valve arrangement with a first valve and a second valve having the following features:
a) the first valve has a pressure medium input chamber (39) and a pressure medium output chamber (7) which are arranged in a housing (41);
b) the pressure medium output chamber (7) is to be connected by way of an inlet and outlet valve arrangement (2, 3, 4) selectively to the pressure medium input chamber (39) or to a pressure medium sink or to be isolated from both of them;
c) the second valve is in the form of a shuttle valve which has a pressure medium output (10) and a first pressure medium input (49) and a second pressure medium input (50), the pressure medium output (10) being arranged to be connected selectively to the first pressure medium input (49) or to the second pressure medium input (50);
d) in the second valve a pressure medium chamber (38) is provided, in which a seat valve having a first valve seat (14) associated with the first pressure medium input (49) and a second valve seat (21) associated with the second pressure medium input (50) is arranged, between which valve seats a valve member (37) is movably arranged;
e) the pressure medium output (10) of the shuttle valve is formed by the pressure medium chamber (38) and by a pressure medium line (36) adjoining the pressure medium chamber (38);
f) the first pressure medium input (49) of the shuttle valve is connected to a pressure medium output (48) of the first valve;
characterised by the following features
g) the connection between the first pressure medium input (49) of the shuttle valve (14, 21, 37) and the pressure medium output (48) of the first valve (1) consists of a first channel (9) arranged in the housing (41) of the first valve (1);
h) the output-side end of the channel (9) facing the pressure medium chamber (38) of the shuttle valve (14, 21, 37) is constructed so that it serves as first valve seat (14) for the shuttle valve (14, 21, 37);
i) an additional housing part (23) is provided, which is secured in the region of the first valve seat (14) to the housing (41) of the first valve (1) in such a manner that it forms with the housing (41) of the first valve (1) the pressure chamber (38) in which the first valve seat (14) of the shuttle valve (14, 21, 27) lies;
k) the additional housing part (23) has a second channel (24) which opens into the pressure medium chamber (38) of the shuttle valve (14, 21, 37);
l) the end of the second channel (24) opening into the pressure medium chamber (38) is constructed so that it serves as second valve seat (21) of the shuttle valve (14, 21, 37).

2. Valve arrangement according to claim 1, characterised by the following features:
a) arranged on the side of the additional housing part (23) remote from the pressure medium chamber (38) of the shuttle valve (14, 21, 37) is a third valve (19) which serves for connection of the second pressure medium input (50) of the shuttle valve (14, 21, 37) to a pressure medium source;
b) the third valve (19) has a pressure medium input chamber (16) connected by way of a pressure medium line to the pressure medium source and a pressure medium output chamber (22) connected to the second channel (24) arranged in the additional housing part (23).

3. Valve arrangement according to claim 2,
characterised by the following features:
a) the pressure medium line is in the form of a third channel (15) arranged in the additional housing part (23), which channel is in connection with a fourth channel (8) arranged in the housing (41) of the first valve (1), which fourth channel in turn is connected to the pressure medium input chamber (39) of the first valve (1);
b) at its end facing the third valve (19), the third channel (15) arranged in the additional housing part (23) is in the form of a valve seat (18), which together with a valve member (20) movably arranged in the third valve (19) forms the third valve (19);
c) the end region of the third channel (15) having the valve seat (18) is in the form of the pressure medium input chamber (16) for the third valve (19);
d) the pressure medium output chamber (22) for the third valve (19) connected with the second channel (24) arranged in the additional housing part (23) is arranged in the additional housing part (23) on the side of the additional housing part (23) facing the third valve (19) and is bounded by the side of the third valve (19) facing the additional housing part (23).

4. Valve arrangement according to at least one of the preceding claims, characterised in that the additional housing part (23) is in the form of a connecting part for connecting the third valve (19) to the housing (41) of the first valve (1), the side of the additional housing part (23) facing the housing (41) of the first valve (1) having the second valve seat (21) and the second pressure medium input (50) of the shuttle valve.

5. Valve arrangement according to at least one of the preceding claims, characterised in that the additional housing part (23) is detachably connected to the housing (41) of the first valve (1) and to the housing of the third valve (19).

6. Valve arrangement according to at least one of the preceding claims, characterised in that the first valve (1) has a pressure medium connection (31) which is connected to a pressure medium connector (35) of a fourth valve (28).

7. Valve arrangement according to at least one of the preceding claims, characterised in that the fourth valve (28) has a housing (27) which is connected by way of a connecting part (33) to the housing (41) of the first valve (1).

8. Valve arrangement according to at least one of the preceding claims, characterised in that the fourth valve is in the form of an ABS-control valve having a pressure medium input (32), a pressure medium output (26) and a pressure medium outlet (30) and also an electromagnet (21) serving for operation of the valve of the ABS-control valve.

9. Valve arrangement according to at least one of the preceding claims, characterised in that the valve member (37) of the shuttle valve (14, 21, 37) is movably held in a part constructed in the manner of a cage, wherein the part constructed in the manner of a cage is arranged on the end side of the connecting part (23) facing the recess (12) of the housing (41) of the first valve (1).

## Revendications

1. Dispositif de soupape comportant une première soupape et une seconde soupape, présentant les éléments suivants :
a) la première soupape présente une chambre d'entrée de fluide sous pression (39) et une chambre de sortie de fluide sous pression (7), qui sont agencées dans un boîtier (41) ;
b) la chambre de sortie de fluide sous pression (7) peut être reliée via un dispositif de soupape d'admission ou d'évacuation (2, 3, 4) au choix à la chambre d'entrée de fluide sous pression (39), ou bien à un puits de fluide sous pression, ou bien elle peut être obturée par rapport aux deux ;
c) la seconde soupape est réalisée sous forme d'une soupape d'inversion, qui possède une sortie de fluide sous pression (10) ainsi qu'une première entrée de fluide sous pression (49) et une seconde entrée de fluide sous pression (50), la sortie de fluide sous pression (10) pouvant être reliée au choix à la première entrée de fluide sous pression (49) ou bien à la seconde entrée de fluide sous pression (50) ;
d) il est prévu dans la seconde soupape une chambre de fluide sous pression (38) dans laquelle une soupape à siège est agencée avec un premier siège de soupape (14) associé à la première entrée de fluide sous pression (49) et avec un second siège de soupape (21) associé à la seconde entrée de fluide sous pression (50), entre lesquels un organe de soupape (37) est agencé de façon mobile ;
e) la sortie de fluide sous pression (10) de la soupape d'inversion est formée par la chambre de fluide sous pression (38) ou par une conduite de fluide sous pression (36) qui se raccorde à la chambre de fluide sous pression (38) ;
f) la première entrée de fluide sous pression (49) de la soupape d'inversion est reliée à une sortie de fluide sous pression (48) de la première soupape ;
caractérisé en ce que
g) la liaison entre la première entrée de fluide sous pression (49) de la soupape d'inversion (14, 21, 37) et la sortie de fluide sous pression (48) de la première soupape (1) est constituée par un premier canal (9) agencé dans le boîtier (41) de la première soupape (1) ;
h) l'extrémité côté sortie du canal (9), qui est orientée vers la chambre de fluide sous pression (38) de la soupape d'inversion (14, 21, 37) est réalisée de telle sorte qu'elle sert de premier siège de soupape (14) pour la soupape d'inversion (14, 21, 37) ;
i) il est prévu un élément de boîtier supplémentaire (23) qui est fixé dans la région du premier siège de soupape (14) sur le boîtier (41) de la première soupape (1), de telle sorte qu'il forme conjointement avec le boîtier (41) de la première soupape (1) la chambre de fluide sous pression (38) dans laquelle se trouve le premier siège de soupape (14) de la soupape d'inversion (14, 21, 37) ;
k) l'élément de boîtier supplémentaire (23) présente un second canal (24) qui débouche dans la chambre de fluide sous pression (38) de la soupape d'inversion (14, 21, 37) ;
l) l'extrémité du second canal (24), laquelle débouche dans la chambre de fluide sous pression (38) est réalisée de telle sorte qu'elle sert de second siège de soupape (21) pour la soupape d'inversion (14, 21, 37).

2. Dispositif de soupape selon la revendication 1, caractérisé par les éléments suivants :
a) une troisième soupape (19) est agencée sur le côté de l'élément de boîtier supplémentaire (23), qui est détourné de la chambre de fluide sous pression (38) de la soupape d'inversion (14, 21, 37), soupape (19) qui sert à la liaison de la seconde entrée de fluide sous pression (50) de la soupape d'inversion (14, 21, 37) avec une source de fluide sous pression ;
b) la troisième soupape (19) possède une chambre d'entrée de fluide sous pression (16) reliée via une conduite de fluide sous pression à la source de fluide sous pression, et une chambre de sortie de fluide sous pression (22) reliée au second canal (24) agencé dans l'élément de boîtier supplémentaire (23).

3. Dispositif de soupape selon la revendication 2, caractérisé par les éléments suivants :
a) la conduite de fluide sous pression est réalisée sous forme d'un troisième canal (15) agencé dans l'élément de boîtier supplémentaire (23), qui est en liaison avec un quatrième canal (8) agencé dans le boîtier (41) de la première soupape (1), qui est à son tour relié à la chambre d'entrée de fluide sous pression (39) de la première soupape (1) ;
b) le troisième canal (15) agencé dans l'élément de boîtier supplémentaire (23) est réalisé, à son extrémité orientée vers la troisième soupape (19), sous forme d'un siège de soupape (18) qui forme la troisième soupape (19) conjointement avec un organe de soupape (20) agencé de façon mobile dans la troisième soupape (19) ;
c) la région d'extrémité du troisième canal (15), laquelle présente le siège de soupape (18), est réalisée sous forme d'une chambre d'entrée de fluide sous pression (16) pour la troisième soupape (19) ;
d) la chambre de sortie de fluide sous pression (22) pour la troisième soupape (19), chambre qui est reliée au second canal (24) agencé dans l'élément de boîtier supplémentaire (23), est agencée dans l'élément de boîtier supplémentaire (23) sur le côté de l'élément de boîtier supplémentaire (23) qui est orienté vers la troisième soupape (19), et elle est délimitée par le côté de la troisième soupape (19) qui est orienté vers l'élément de boîtier supplémentaire (23).

4. Dispositif de soupape selon l'une au moins des revendications précédentes, caractérisé en ce que l'élément de boîtier supplémentaire (23) est réalisé sous forme d'un élément de liaison pour relier la troisième soupape (19) au boîtier (41) de la première soupape (1), et le côté de l'élément de boîtier supplémentaire (23), qui est orienté vers le boîtier (41) de la première soupape (1) présente le second siège de soupape (21) et la seconde entrée de fluide sous pression (50) de la soupape d'inversion.

5. Dispositif de soupape selon l'une au moins des revendications précédentes, caractérisé en ce que l'élément de boîtier supplémentaire (23) est relié de façon détachable au boîtier (41) de la première soupape (1) et au boîtier de la troisième soupape (19).

6. Dispositif de soupape selon l'une au moins des revendications précédentes, caractérisé en ce que la première soupape (1) possède un raccord de fluide sous pression (31) qui est relié à un manchon de raccordement de fluide sous pression (35) d'une quatrième soupape (28).

7. Dispositif de soupape selon l'une au moins des revendications précédentes, caractérisé en ce que la quatrième soupape (28) présente un boîtier (27) qui est relié via un élément de liaison (33) au boîtier (41) de la première soupape (1).

8. Dispositif de soupape selon l'une au moins des revendications précédentes, caractérisé en ce que la quatrième soupape est réalisée sous forme d'une soupape de réglage antiblocage comportant une entrée de fluide sous pression (32), une sortie de fluide sous pression (26) et une évacuation de fluide sous pression (30), ainsi qu'un électroaimant (21) servant à l'actionnement de la soupape de réglage antiblocage.

9. Dispositif de soupape selon l'une au moins des revendications précédentes, caractérisé en ce que l'organe de soupape (37) de la soupape d'inversion (14, 21, 37) est retenu de façon mobile dans une partie réalisée à la manière d'une cage, et en ce que la partie réalisée à la manière d'une cage est agencée sur la face frontale de l'élément de liaison (23) qui est orientée vers l'évidement (12) du boîtier (41) de la première soupape (1).
